# FASCICULE DE BREVET EUROPEEN

(11) **EP 2 012 968 B1**
(45) Date de publication et mention de la délivrance du brevet: **25.11.2009**
(21) Numéro de dépôt: 07731737.8
(22) Date de dépôt: 14.03.2007
(51) Int. Cl.: B23Q 39/04, B23Q 1/00

(54) **MACHINE MODULAIRE**
MODULARE MASCHINE
MODULAR MACHINE

(30) Priorité: 15.03.2006 FR 0650877
(43) Date de publication de la demande: 14.01.2009
(73) Titulaire: Roser et Duprat Project Managing (Société à Responsabilité Limitée), 67330 Dossenheim sur Zinsel (FR)
(72) Inventeur: ROSER, Philippe, F-67290 Volksberg (FR)
(74) Mandataire: Nuss, Pierre
(86) Numéro de dépôt international: PCT/FR2007/050921
(87) Numéro de publication internationale: WO 2007/104893

(56) Documents cités:
- WO-A-2005/095048
- DE-A1- 3 812 527
- FR-A1- 2 825 940
- US-B1- 6 299 392

## Description

La présente invention se rapporte au domaine des équipements de production spécialisés, et plus particulièrement aux machines modulaires et multiproduits.

Les machines actuellement disponibles sur le marché présentent un coût relativement élevé qui nécessite, pour leur amortissement, la production de grandes séries. Or, selon le type d'opérations à réaliser sur les produits, il est souvent nécessaire de disposer de plusieurs machines dont chacune est adaptée à un travail spécifique sur le produit à réaliser. Ceci a pour conséquence que l'investissement à réaliser est très important.

A cet effet, des systèmes constitués par différents modules fonctionnels destinés à être reliés entre eux pour constituer une chaîne de transfert sont connus, et notamment par le document WO 2005/095048.

Il existe donc un besoin de disposer d'une machine dite standard dont la base conviendrait à tout type d'opération sur le produit et pouvant donc supporter et fonctionner avec différents outillages. Une telle machine présenterait l'avantage d'être amortissable sur plusieurs produits différents.

Une telle machine devrait également être modulable en terme de poste de travail, c'est-à-dire qu'il devrait être possible de pouvoir l'adapter aussi bien pour un traitement totalement automatisé que pour un traitement semi-automatisé dans lequel un ou plusieurs opérateurs interviennent également sur les pièces à traiter, en réalisant une opération manuelle.

A cet effet, la présente invention a pour objet une machine modulaire pour le traitement de pièces par au moins une station de travail autonome amovible, constituée par un bâti sur lequel sont montés, d'une part, la ou les stations de travail autonomes et, d'autre part, un support mobile de pièces à traiter commandé par un automate et mobile par rapport à la ou aux stations de travail autonomes, par au moins un moyen de réception d'une station de travail autonome amovible destinée à être montée sur le bâti, à proximité du support mobile, et par au moins un posage formant moyen de réception des pièces à traiter et monté sur le support mobile. La machine modulaire est caractérisée en ce que chaque moyen de réception est fixé de manière amovible sur un dispositif de fixation correspondant du bâti muni d'au moins une borne de connexion à une source d'énergie et présente un dispositif d'indexage pour son positionnement sur ledit dispositif de fixation correspondant.

L'invention sera mieux comprise, grâce à la description ci-après, qui se rapporte à deux modes de réalisation préférés, donnés à titre d'exemples non limitatifs, et expliqués avec référence aux dessins schématiques annexés, dans lesquels :
La figure 1 est une vue en perspective d'un premier mode de réalisation d'une machine modulaire selon l'invention ;
La figure 2 est une vue en perspective d'un second mode de réalisation d'une machine modulaire selon l'invention ;
La figure 3 est une vue en perspective de la machine représentée à la figure 2, pourvue d'un sas d'accès opérateur ouvert ;
La figure 4 est une vue en perspective du sas d'accès opérateur fermé d'une machine modulaire selon l'invention pourvue d'une bande de convoyage;
La figure 5 est une vue en perspective du support mobile et des bornes de connexion du bâti d'une machine selon l'invention ;
La figure 6 est une vue identique à celle de la figure 5 montrant les moyens de réception d'une station de travail autonome montés sur des bornes de connexion du bâti ;
La figure 7 est une vue en perspective d'un moyen de réception d'une station de travail autonome selon l'invention ;
Les figures 8A, 8B et 8C sont des vues en élévation latérale, en élévation frontale et en coupe selon le plan A-A d'un moyen de réception d'une station de travail autonome monté sur une borne de connexion du bâti de la machine modulaire selon l'invention, et
La figure 9 est une vue en perspective d'une station de rivetage montée sur un moyen de réception selon l'invention.

Les figures annexées représentent une machine modulaire 1 selon l'invention pour le traitement de pièces par au moins une station de travail autonome 2 amovible, constituée par un bâti 3 sur lequel sont montés, d'une part, la ou les stations de travail autonomes 2 fixées sur au moins un moyen de réception 6 d'une station de travail autonome 2 amovible destinée à être montée sur le bâti 3, à proximité du support mobile 5, et, d'autre part, un support mobile 5 de pièces à traiter commandé par un automate et mobile par rapport à la ou aux stations de travail autonomes 2, et par au moins un posage 13 formant moyen de réception des pièces à traiter et monté sur le support mobile 5.

De manière caractéristique, chaque moyen de réception 6 est fixé de manière amovible sur un dispositif de fixation 7 correspondant du bâti 3 muni d'au moins une borne de connexion 9 à une source d'énergie et présente un dispositif d'indexage 8 pour son positionnement sur ledit dispositif de fixation 7 correspondant.

De manière avantageuse et selon l'invention, chaque station de travail autonome 2 peut présenter un système intégré de commande et de programmation. Ceci implique qu'une station de travail autonome 2 peut réaliser les opérations décrites dans son système, même lorsqu'elle n'est pas intégrée dans une machine modulaire 1 selon l'invention.

Les stations de travail autonomes 2 pourront, par exemple, être adaptées pour :
- réaliser un contrôle des pièces avant leur traitement, par la vérification de la présence d'une pièce, la lecture de leur code-barres ou analogue,
- usiner ou déformer les pièces par perçage, fraisage, ébavurage, sertissage, pliage, emboutissage ou analogue,
- réaliser un assemblage par soudage, collage, rivetage, vissage ou analogue,
- réaliser un contrôle final des pièces achevées, à savoir par laser, caméra, fibres optiques ou autres moyens analogues pour vérifier les cotes de la pièce, la pression, l'étanchéité, etc...
- réaliser un marquage des pièces par jet d'encre, laser, tampographie, étiquetage ou analogue, et
- décharger et aiguiller automatiquement les pièces traitées vers des moyens de récupération des pièces défectueuses et des pièces traitées correctement.

Le système de commande de la machine modulaire 1 présente deux niveaux. Le premier niveau de commande est réalisé par l'automate ou automate maître, pouvant, par exemple, être intégré dans le coffret électrique de la machine modulaire 1. Cet automate commande les déplacements du support mobile 5 et échange notamment des informations avec les stations de travail autonomes 2. Le second niveau est réalisé dans le système intégré de commande et de programmation de chaque station de travail autonome 2, chaque station pouvant être programmée et comportant un ou des programmes de production.

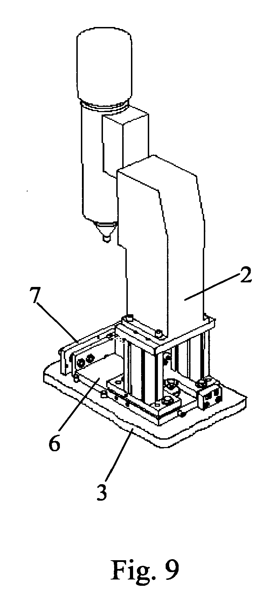

Chaque moyen de réception 6 peut être réalisé sous la forme d'une embase et le dispositif d'indexage 8 peut être constitué par un ergot 8' coopérant avec un évidement 8" correspondant prévu sur chaque dispositif de fixation 7. L'embase formant moyen de réception 6 réalise ainsi une interface entre les dispositifs de fixation 7 et les stations de travail autonomes 2 qui permet un positionnement précis et reproductible des stations de travail autonomes 2 sur le bâti 3. Elle permet également de réaliser une fixation rapide et aisée de chaque station de travail autonome 2. La figure 9 représente à cet effet une station de rivetage montée sur un tel moyen de réception 6.

De manière avantageuse, chaque embase formant moyen de réception 6 peut présenter au moins un dispositif de raccordement 14 à une borne de connexion 9 correspondante de chaque dispositif de fixation 7.

De manière caractéristique, une borne de connexion 9 de chaque dispositif de fixation 7 peut être reliée à une source d'énergie électrique. Outre le raccordement d'actionneurs, cette borne de connexion 9 peut également réaliser la reconnaissance ou l'identification de la station de travail autonome 2 installée sur le moyen de réception 6, comme cela sera décrit ci-après.

L'invention prévoit aussi qu'une borne de connexion 9 de chaque dispositif de fixation 7 peut être reliée à une source d'air comprimé.

Elle prévoit également qu'une borne de connexion 9 de chaque dispositif de fixation 7 peut être reliée à l'automate par l'intermédiaire d'un bus de terrain. La liaison établie entre une station de travail autonome 2 montée sur un moyen de réception 6 raccordé à un dispositif de fixation 7 disposant d'une telle borne de connexion 9 et le bus de terrain permet à l'automate de commander la station de travail autonome 2 de manière à coordonner l'ensemble des opérations réalisées dans la machine modulaire 1 selon l'invention.

En outre, il peut être prévu de manière avantageuse que chaque dispositif de fixation 7 peut comprendre un moyen de reconnaissance de la station de travail autonome 2 installée sur le moyen de réception 6. Ce moyen de reconnaissance peut être lui-même relié à l'automate et permettre à la machine modulaire 1 d'identifier chaque station de travail autonome 2 installée et d'indiquer, par exemple par l'intermédiaire d'un dispositif d'affichage, si chaque station de travail autonome 2 correspond ou non au type de travail programmé.

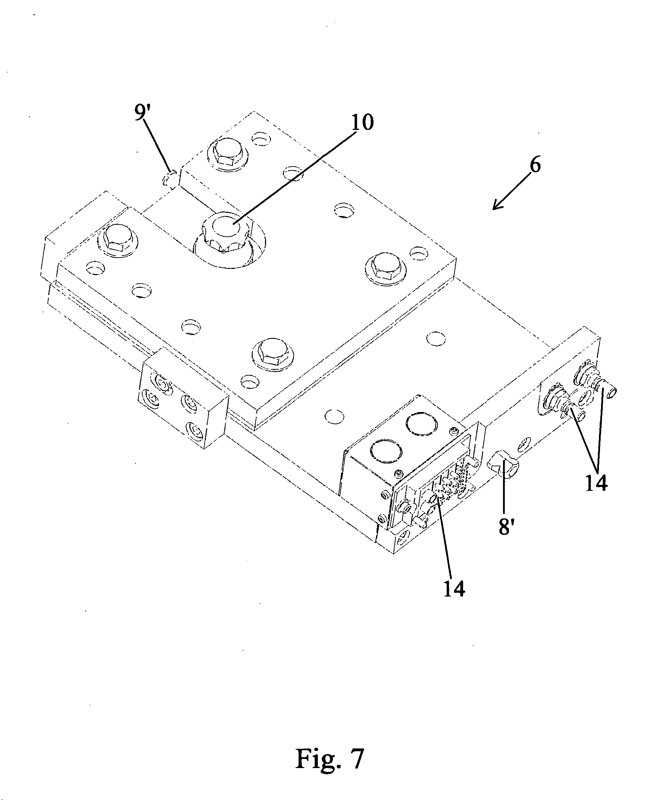

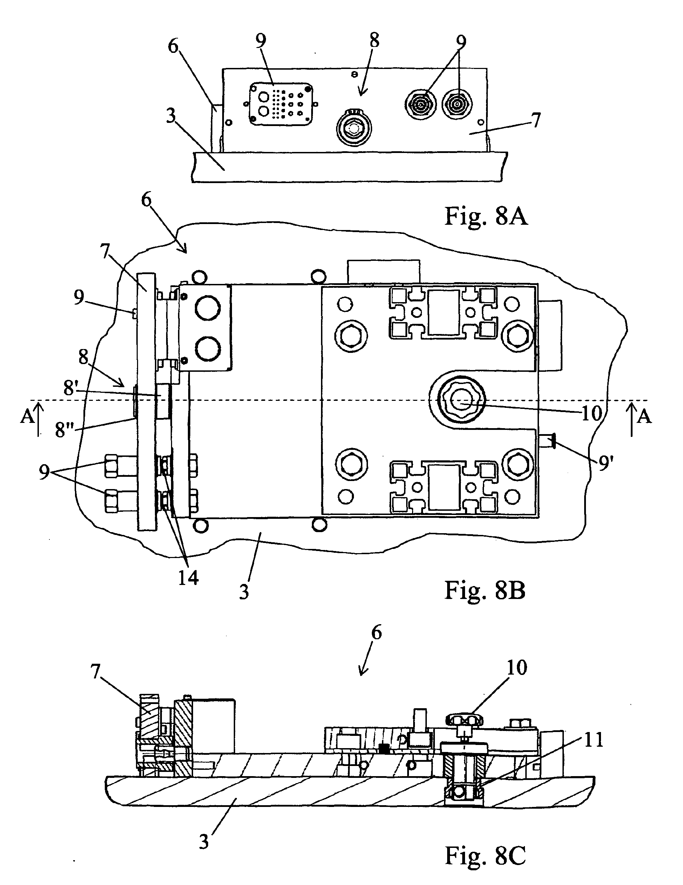

De manière avantageuse, chaque embase formant moyen de réception 6 peut être fixée de manière amovible sur un dispositif de fixation 7 correspondant par l'intermédiaire d'un élément de serrage rapide 10 traversant le moyen de réception 6 pour s'engager dans une bague 11 du bâti 3. Un tel élément de serrage rapide 10 est représenté sur les figures 7, 8B et 8C. Il permet de réaliser une fixation et une libération aisées et reproductibles. Pour la fixation du moyen de réception 6, la présence de l'élément de serrage rapide 10 et de la bague 11 correspondante permet un positionnement et une fixation précis et reproductibles du moyen de réception 6. En outre, il peut également être créé un coussin d'air entre le moyen de réception 6 et le bâti 3 dans le cas où une borne de connexion 9 du dispositif de fixation 7 est reliée à une source d'air comprimé, lors du retrait du moyen de réception 6 afin de faciliter le glissement de ce dernier. A cet effet, on peut prévoir une borne de connexion 9' sur le moyen de réception 6 pour le raccordement à l'arrivée d'air comprimé (cf. figure 8B).

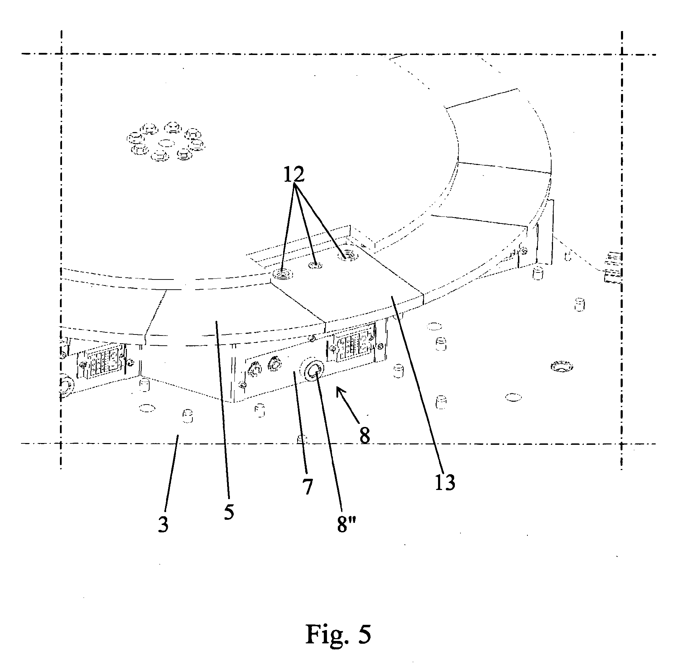

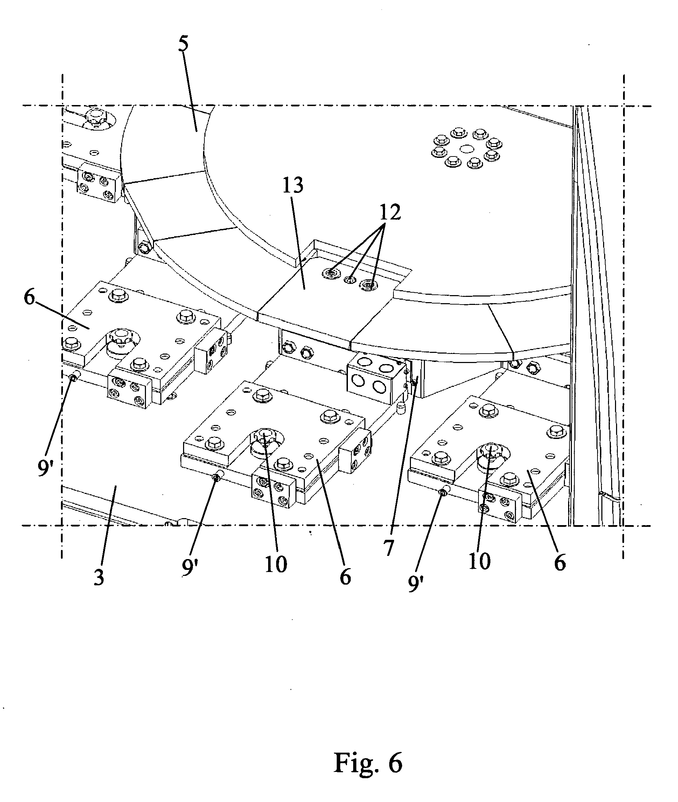

Selon l'invention, et comme cela est représenté sur les figures 5 et 6, les posages 13 peuvent être montés de manière amovible sur le support mobile 5, ce dernier étant pourvu de moyens de positionnement et de fixation 12 desdits posages 13. De plus, lesdits moyens de positionnement et de fixation 12 peuvent être disposés sur le support mobile 5, de telle sorte que leur écartement respectif correspond à celui des stations de travail autonomes 2 sur le bâti 3. Ce positionnement permet le traitement simultané de chaque pièce par chaque station de travail autonome 2. Les posages 13 sont de préférence configurés pour maintenir une pièce spécifique et sont donc changés lorsque la machine modulaire est configurée pour une nouvelle gamme.

Afin de permettre de réaliser une coordination de l'ensemble des opérations réalisées dans la machine modulaire 1 selon l'invention, les moyens de positionnement et de fixation 12 peuvent être reliés à l'automate.

De plus, comme cela est déjà le cas pour les dispositifs de fixation 7, les moyens de positionnement et de fixation 12 peuvent comprendre un moyen de reconnaissance de chaque posage 13 installé sur le support mobile 5. Ce moyen de reconnaissance, qui peut être relié à l'automate, permet donc à la machine modulaire 1 d'identifier chaque posage 13 installé.

Bien entendu, il peut également être prévu que le bâti 3 comporte un moyen de reconnaissance de chaque posage 13 installé sur le support mobile 5.

Les moyens de reconnaissance des stations de travail 2 et des posages 13 peuvent être du même type ou non et se présenter, par exemple, sous la forme de moyens de lecture de code-barres situés sur les stations de travail 2 ou les posages 13, ou encore sous la forme de systèmes d'identification inductifs ou magnétiques sans contact.

L'ensemble des moyens de reconnaissance automatique des stations de travail 2 et des posages 13 permet ainsi de garantir l'utilisation des bons outillages pour les bonnes pièces à traiter et permet également, de manière avantageuse, un changement de production ne nécessitant pas de compétences techniques particulières.

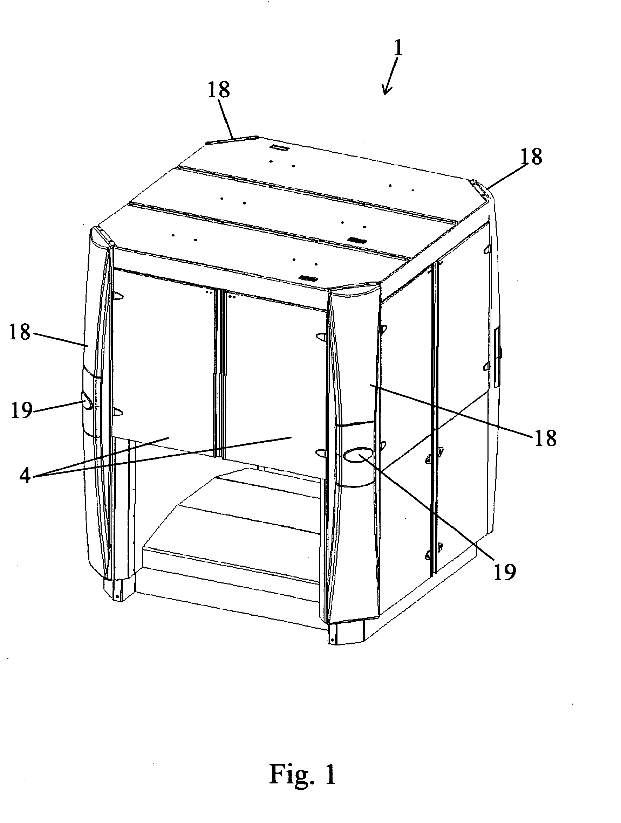

Selon l'invention, le bâti 3 peut être constitué par au moins trois montants 18 verticaux. De manière préférée, et comme représenté sur les figures 1 à 4 annexées, le bâti est constitué par quatre montants 18.

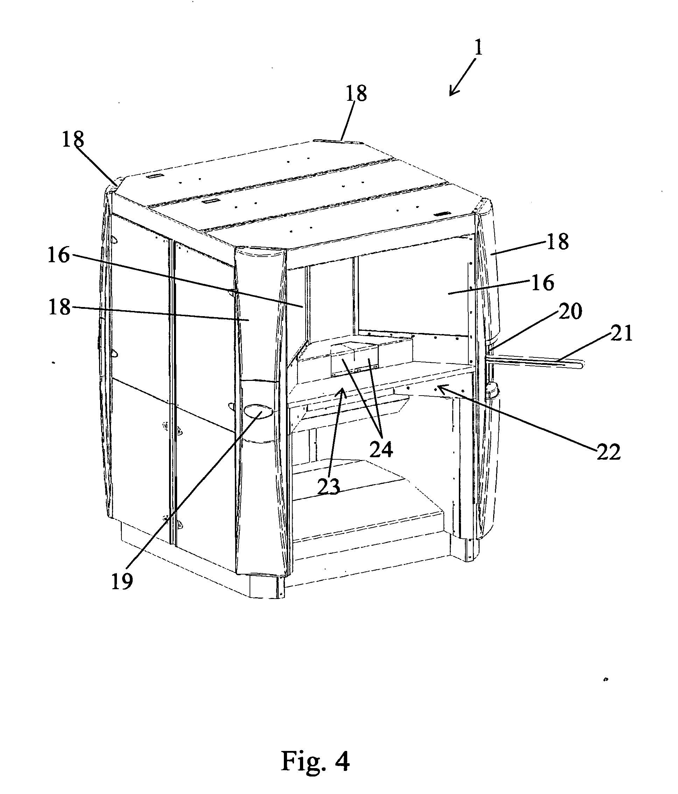

De plus, comme cela est également représenté sur les figures 1 à 4, au moins un des montants 18 peut présenter une trappe 19 d'accès à un passage traversant 20 réalisé dans ledit au moins un montant 18 pour un moyen de convoyage 21 d'amenée ou de décharge de pièces à traiter vers les ou hors des posages 13 de pièces à traiter. Ce moyen de convoyage 21 peut être réalisé sous la forme d'une goulotte ou d'une bande de convoyage, par exemple, comme cela est représenté sur la figure 4. Cette configuration présente l'avantage d'être compacte et de réaliser une optimisation de l'espace de travail.

Selon un premier mode de réalisation, la machine modulaire présente un fonctionnement totalement automatique. Une machine selon ce mode de réalisation est représentée sur la figure 1. Des panneaux de protection 4 peuvent être disposés entre chaque montant 18 pour empêcher l'accès aux stations de travail autonomes 2 lors du fonctionnement de la machine modulaire 1.

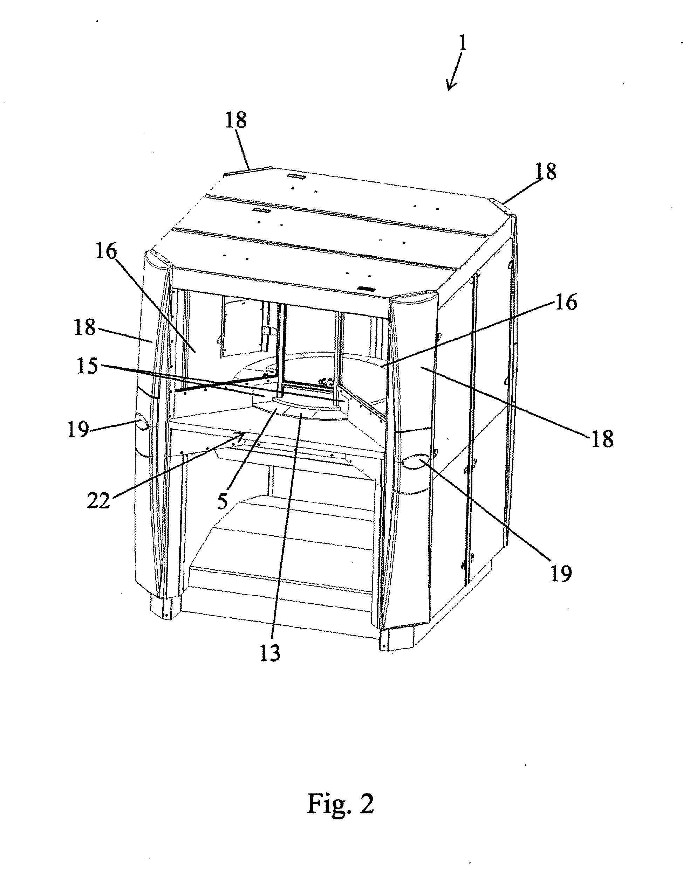

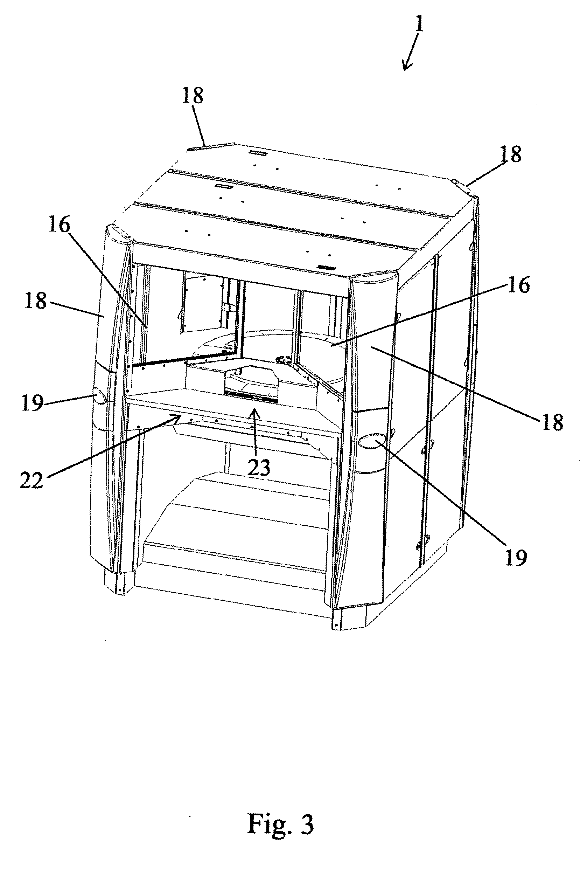

Selon un second mode de réalisation, la machine modulaire 1 peut présenter, entre deux montants 18, un poste d'intervention 22 pour un opérateur. Ici, la machine peut présenter un fonctionnement semi-automatique dans lequel un ou plusieurs opérateurs interviennent dans le cycle de traitement des pièces. La figure 2 représente une telle machine modulaire 1 dans laquelle a été intégré un poste d'intervention 22. Ce dernier donne accès à l'opérateur au support mobile 5 sur lequel sont montés les posages 13 de pièces à traiter. Tel que cela est représenté sur les figures, le poste d'intervention 22 peut être délimité par des parois de protection 16 (illustrées en transparence sur les figures 2 et 3) ne permettant à l'opérateur d'accéder qu'à une seule pièce à la fois. Ces parois de protection 16 peuvent présenter des éléments coulissants 15 situés au niveau du support mobile 5, lesdits éléments coulissants 15 s'ouvrant pour le déplacement dudit support mobile 5 et se refermant lorsque ce dernier est à l'arrêt.

Il peut également être prévu d'équiper le poste d'intervention 22 d'un sas 23 à accès protégé. Ce sas, représenté aux figures 3 et 4, peut présenter deux portillons 24 dont l'ouverture et la fermeture peuvent être commandées soit par l'opérateur, soit par l'automate.

Selon une caractéristique de l'invention, l'ouverture et la fermeture desdits portillons 24 et des éléments coulissants 15 sont synchronisées avec le déplacement du support mobile 5, de telle sorte que le support mobile 5 n'est déplacé que lorsque les portillons 24 ferment le sas 23 et que les éléments coulissants 15 sont ouverts.

Bien que les figures annexées représentent un seul poste d'intervention 22, il est possible d'équiper la machine modulaire 1 de plusieurs postes d'intervention 22, par exemple de deux postes d'intervention 22 situés l'un en face de l'autre dans une machine modulaire 1 présentant quatre montants 18.

Comme représenté sur les figures annexées, le support mobile 5 peut être réalisé sous la forme d'un plateau tournant sur lequel sont disposés les posages 13 de pièces à traiter, tandis que la partie du bâti sur laquelle sont disposés les dispositifs de fixation 7 est réalisée sous la forme d'une plaque plane.

Le support mobile 5 peut également être réalisé sous la forme d'un transfert linéaire, les stations de travail 2 étant dans ce cas alignées le long de ce transfert linéaire.

La machine modulaire 1 selon l'invention permet donc de réaliser de nombreuses séries de pièces différentes sans avoir à réaliser de modifications structurelles de ladite machine modulaire 1, ni de changer de machine afin d'en sélectionner une spécialement dédiée au travail à réaliser. En effet, il suffit de changer de stations de travail autonomes 2 et/ou de posages 13 pour adapter la machine modulaire 1 à la série de pièces à réaliser. En outre, la machine modulaire 1 selon l'invention est également adaptée pour les opérations nécessitant l'intervention manuelle d'un opérateur.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, tel que défini par les revendications ci-jointes.

## Revendications

1. Machine modulaire pour le traitement de pièces par au moins une station de travail autonome (2) amovible, constituée par un bâti (3) sur lequel sont montés, d'une part, la ou les stations de travail autonomes (2) et, d'autre part, un support mobile (5) de pièces à traiter commandé par un automate et mobile par rapport à la ou aux stations de travail autonomes (2), par au moins un moyen de réception (6) d'une station de travail autonome (2) amovible destinée à être montée sur le bâti (3), à proximité du support mobile (5), et par au moins un posage (13) formant moyen de réception des pièces à traiter et monté sur le support mobile (5),
machine modulaire **caractérisée en ce que** chaque moyen de réception (6) est fixé de manière amovible sur un dispositif de fixation (7) correspondant du bâti (3) muni d'au moins une borne de connexion (9) à une source d'énergie et présente un dispositif d'indexage (8) pour son positionnement sur ledit dispositif de fixation (7) correspondant.

2. Machine modulaire selon la revendication 1, **caractérisée en ce que** chaque station de travail autonome (2) présente un système intégré de commande et de programmation.

3. Machine modulaire selon l'une quelconque des revendications 1 et 2, **caractérisée en ce que** chaque moyen de réception (6) est réalisé sous la forme d'une embase et **en ce que** le dispositif d'indexage (8) est constitué par un ergot (8') coopérant avec un évidement (8") correspondant prévu sur chaque dispositif de fixation (7).

4. Machine modulaire selon la revendication 3, **caractérisée en ce que** chaque embase formant moyen de réception (6) présente au moins un dispositif de raccordement (14) à une borne de connexion (9) correspondante de chaque dispositif de fixation (7).

5. Machine modulaire selon la revendication 4, **caractérisée en ce qu'**une borne de connexion (9) de chaque dispositif de fixation (7) est reliée à une source d'énergie électrique.

6. Machine modulaire selon l'une quelconque des revendications 1 à 5, **caractérisée en ce qu'**une borne de connexion (9) de chaque dispositif de fixation (7) est reliée à une source d'air comprimé.

7. Machine modulaire selon l'une quelconque des revendications 1 à 6, **caractérisée en ce qu'**une borne de connexion (9) de chaque dispositif de fixation (7) est reliée à l'automate par l'intermédiaire d'un bus de terrain.

8. Machine modulaire selon l'une quelconque des revendications 1 à 7, **caractérisée en ce que** chaque dispositif de fixation (7) comprend un moyen de reconnaissance de la station de travail autonome (2) installée sur le moyen de réception (6).

9. Machine modulaire selon l'une quelconque des revendications 3 à 8, **caractérisée en ce que** chaque embase formant moyen de réception (6) est fixée de manière amovible sur un dispositif de fixation (7) correspondant par l'intermédiaire d'un élément de serrage rapide (10) traversant le moyen de réception (6) pour s'engager dans une bague (11) du bâti (3).

10. Machine modulaire selon l'une quelconque des revendications 1 à 9, **caractérisée en ce que** le ou les posages (13) sont montés de manière amovible sur le support mobile (5), **en ce que** ce dernier est pourvu de moyens de positionnement et de fixation (12) du ou desdits posages (13) et **en ce que** lesdits moyens de positionnement et de fixation (12) sont disposés sur le support mobile (5), de telle sorte que leur écartement respectif correspond à celui des stations de travail autonomes (2) sur le bâti (3).

11. Machine modulaire selon la revendication 10, **caractérisée en ce que** les moyens de positionnement et de fixation (12) sont reliés à l'automate.

12. Machine modulaire selon l'une quelconque des revendications 10 et 11, **caractérisée en ce que** les moyens de positionnement et de fixation (12) comprennent un moyen de reconnaissance de chaque posage (13) installé sur le support mobile (5).

13. Machine modulaire, selon la revendication 10, **caractérisée en ce que** le bâti (3) comporte un moyen de reconnaissance de chaque posage (13) installé sur le support mobile (5).

14. Machine modulaire selon l'une quelconque des revendications 1 à 13, **caractérisée en ce que** le bâti (3) est constitué par au moins trois montants (18) verticaux.

15. Machine modulaire selon la revendication 14, **caractérisée en ce qu'**au moins un des montants (18) présente une trappe (19) d'accès à un passage traversant (20) réalisé dans ledit au moins un montant (18) pour un moyen de convoyage (21) d'amenée ou de décharge de pièces à traiter vers les ou hors des posages (13).

16. Machine modulaire, selon l'une quelconque des revendications 14 et 15, **caractérisée en ce qu'**elle présente, entre deux montants (18), un poste d'intervention (22) pour un opérateur.

17. Machine modulaire, selon la revendication 16, **caractérisée en ce que** le poste d'intervention (22) est équipé d'un sas (23) à accès protégé.

18. Machine modulaire, selon l'une quelconque des revendications 16 et 17, **caractérisée en ce que** le poste d'intervention (22) est délimité par des parois de protection (16) présentant des éléments coulissant (15) situés au niveau du support mobile (5), lesdits éléments coulissants (15) s'ouvrant pour le déplacement dudit support mobile (5) et se refermant lorsque ce dernier est à l'arrêt.

19. Machine modulaire, selon les revendications 17 et 18, **caractérisée en ce que** le sas (23) présente deux portillons (24) et **en ce que** l'ouverture et la fermeture desdits portillons (24) et des éléments coulissants (15) sont synchronisées avec le déplacement du support mobile (5).

## Claims

1. Modular machine for the treatment of components in at least one mobile, autonomous work-station (2), consisting of a frame (3) on which are mounted, on the one hand the autonomous work-station(s) (2) and, on the other hand, a mobile support (5) for the components to be treated, which is controlled by an automatic device and can move relative to the mobile, autonomous work-station(s) (2), with at least one reception means (6) for a mobile, autonomous work-station (2) designed to be mounted on the frame (3) close to the mobile support (5), and with at least one deposition point (13) that forms a reception means for the components to be treated, which is mounted on the mobile support (5),
the said modular machine being **characterised in that** each reception means (6) is permanently fixed on a corresponding fixing device (7) of the frame (3), which is provided with at least one connection terminal (9) to a source of energy and comprises an indexing device (8) for its positioning on the said corresponding fixing device (7).

2. Modular machine according to Claim I, **characterised in that** each autonomous work-station (2) has an integrated control and programming system.

3. Modular machine according to either of Claims 1 and 2, **characterised in that** each reception means (6) is made in the form of a base, and the indexing device (8) consists of a pin (8') that co-operates with a corresponding recess (8") provided on each fixing device (7).

4. Modular machine according to Claim 3, **characterised in that** each base that forms a reception means (6) comprises at least one connection device (14) to a corresponding connection terminal (9) of each fixing device (7).

5. Modular machine according to Claim 4, **characterised in that** a connection terminal (9) of each fixing device (7) is connected to a source of electrical energy.

6. Modular machine according to any of Claims 1 to 5, **characterised in that** a connection terminal (9) of each fixing device (7) is connected to a source of compressed air.

7. Modular machine according to any of Claims 1 to 6, **characterised in that** a connection terminal (9) of each fixing device (7) is connected to the said automatic device by a ground bus.

8. Modular machine according to any of Claims 1 to 7, **characterised in that** each fixing device (7) comprises means for recognising the autonomous work-station (2) fitted on the reception means (6).

9. Modular machine according to any of Claims 3 to 8, **characterised in that** each base forming a reception means (6) is fixed permanently on a corresponding fixing device (7) by means of a quick-locking element (10) that passes through the reception means (6) and engages in a ring (11) of the frame (3).

10. Modular machine according to any of Claims I to 9, **characterised in that** the deposition point(s) (13) is/are mounted permanently on the mobile support (5), the latter is provided with means (12) to locate and fix the said deposition point(s) (13), and the said location and fixing means (12) are arranged on the mobile support (5) in such manner that their respective spacing corresponds to that of the autonomous work-stations (2) on the said frame (3).

11. Modular machine according to Claim 10, **characterised in that** the positioning and fixing means (12) are connected to the automatic device.

12. Modular machine according to either of Claims 10 and 11, **characterised in that** the positioning and fixing means (12) comprise means for recognising each deposition point (13) fitted on the mobile support (5).

13. Modular machine according to Claim 10, **characterised in that** the frame (3) comprises means for recognising each deposition point (13) fitted on the mobile support (5).

14. Modular machine according to any of Claims 1 to 13, **characterised in that** the frame (3) consists of at least three vertical uprights (18).

15. Modular machine according to any of Claims 14, **characterised in that** at least one of the uprights (18) has a port (19) giving access to a through-going passage (20) formed in the said at least one upright (18) for conveyor means (21) which bring in or remove the components to be treated, to or from the deposition points (13).

16. Modular machine according to either of Claims 14 and 15, **characterised in that** between two uprights (18) there is an intervention position (22) for an operator.

17. Modular machine according to Claim 16, **characterised in that** the intervention position (22) is equipped with a lock chamber (23) with protected access.

18. Modular machine according either of to Claims 16 and 17, **characterised in that** the intervention position (22) is bounded by protective walls (16) which comprise sliding elements (15) located at the level of the mobile support (5), the said sliding elements (15) opening to allow movement of the said mobile support (5) and closing when the latter is at rest.

19. Modular machine according to Claims 17 and 18, **characterised in that** the lock chamber (23) has two doors (24) and the opening and closing of the said doors (24) and of the sliding elements (15) are synchronised with the movement of the mobile support (5).

## Patentansprüche

1. Modulare Maschine für die Behandlung von Teilen durch wenigstens eine herausnehmbare autonome Arbeitsstation (2), die durch ein Gestell (3), auf dem einerseits die autonome(n) Arbeitsstation(en) (2) und, andererseits, ein beweglicher Träger (5) von zu behandelnden Teilen, der durch einen Automaten gesteuert wird und bezüglich der autonomen Arbeitsstation(en) (2) beweglich ist, angebracht sind, und durch wenigstens ein Mittel zur Aufnahme (6) einer herausnehmbaren autonomen Arbeitsstation (2), die zur Befestigung auf dem Gestell (3) in der Nähe des beweglichen Trägers (5) bestimmt ist, und durch wenigstens eine Ablage (13), die ein Mittel zur Aufnahme der zu behandelnden Teile bildet und auf dem beweglichen Träger (5) befestigt ist, gebildet ist, wobei die modulare Maschine **dadurch gekennzeichnet ist, dass** jedes Mittel zur Aufnahme (6) herausnehmbar auf einer entsprechenden Befestigungsvorrichtung (7) des Gestells (3) befestigt ist, das mit wenigstens einer Klemme (9) zur Verbindung mit einer Energiequelle ausgestattet ist und eine Indexierungsvorrichtung (8) für deren Positionierung auf der entsprechenden Befestigungsvorrichtung (7) aufweist.

2. Modulare Maschine nach Anspruch 1, **dadurch gekennzeichnet, dass** jede autonome Arbeitsstation (2) ein integriertes System zur Steuerung und Programmierung aufweist.

3. Modulare Maschine nach einem der Ansprüche 1 und 2, **dadurch gekennzeichnet, dass** jedes Mittel zur Aufnahme (6) in Form einer Fußplatte ausgebildet ist, und dass die Indexierungsvorrichtung (8) durch einen Nocken (8') gebildet ist, der mit einer entsprechenden Vertiefung (8"), die auf jeder Befestigungsvorrichtung (7) vorgesehen ist, zusammenwirkt.

4. Modulare Maschine nach Anspruch 3, **dadurch gekennzeichnet, dass** jede ein Aufnahmemittel (6) bildende Fußplatte wenigstens eine Vorrichtung zur Anbindung (14) an eine entsprechende Verbindungsklemme (9) jeder Befestigungsvorrichtung (7) aufweist.

5. Modulare Maschine nach Anspruch 4, **dadurch gekennzeichnet, dass** eine Verbindungsklemme (9) jeder Befestigungsvorrichtung (7) mit einer elektrischen Energiequelle verbunden ist.

6. Modulare Maschine nach einem der Ansprüche 1 bis 5, **dadurch gekennzeichnet, dass** eine Verbindungsklemme (9) jeder Befestigungsvorrichtung (7) mit einer Druckluftquelle verbunden ist.

7. Modulare Maschine nach einem der Ansprüche 1 bis 6, **dadurch gekennzeichnet, dass** eine Verbindungsklemme (9) jeder Befestigungsvorrichtung (7) mit dem Automaten mittels einer Bereichsüberbrückung verbunden ist.

8. Modulare Maschine nach einem der Ansprüche 1 bis 7, **dadurch gekennzeichnet, dass** jede Befestigungsvorrichtung (7) ein Mittel zur Erkennung der autonomen Arbeitsstation (2), die auf dem Aufnahmemittel (6) installiert ist, aufweist.

9. Modulare Maschine nach einem der Ansprüche 3 bis 8, **dadurch gekennzeichnet, dass** jede ein Aufnahmemittel (6) bildende Fußplatte herausnehmbar auf einer entsprechenden Befestigungsvorrichtung (7) mittels eines Schnellspannungs-Elements (10), das durch das Aufnahmemittel (6) hindurchtritt, um in einen Ring (11) des Gestells (3) einzugreifen, befestigt ist.

10. Modulare Maschine nach einem der Ansprüche 1 bis 9, **dadurch gekennzeichnet, dass** die Ablage(n) (13) herausnehmbar auf dem beweglichen Träger (5) befestigt ist/sind, und dass letzterer mit Mitteln zur Positionierung und Befestigung (12) der Ablage (13) oder der Ablagen (13) versehen ist, und dass die Mittel zur Positionierung und Befestigung (12) auf dem beweglichen Träger (5) angeordnet sind, derart, dass deren jeweiliger Abstand demjenigen der autonomen Arbeitsstationen (2) auf dem Gestell (3) entspricht.

11. Modulare Maschine nach Anspruch 10, **dadurch gekennzeichnet, dass** die Mittel zur Positionierung und Befestigung (12) mit dem Automaten verbunden sind.

12. Modulare Maschine nach einem der Ansprüche 10 und 11, **dadurch gekennzeichnet, dass** die Mittel zur Positionierung und Befestigung (12) ein Mittel zur Erkennung jeder auf dem beweglichen Träger (5) installierten Ablage (13) umfasst.

13. Modulare Maschine nach Anspruch 10, **dadurch gekennzeichnet, dass** das Gestell (3) ein Mittel zur Erkennung jeder auf dem beweglichen Träger (5) installierten Ablage (13) umfasst.

14. Modulare Maschine nach einem der Ansprüche 1 bis 13, **dadurch gekennzeichnet, dass** das Gestell (3) durch wenigstens drei vertikale Stützen (18) gebildet ist.

15. Modulare Maschine nach Anspruch 14, **dadurch gekennzeichnet, dass** wenigstens eine der Stützen (18) eine Klappe (19) zum Zugang zu einem Durchgang (20) aufweist, die in der wenigstens einen Stütze (18) für ein Transportmittel (21) zum Zuführen oder Abführen von zu behandelnden Teilen zu den oder von den Ablagen (13) weg gebildet ist.

16. Modulare Maschine nach einem der Ansprüche 14 und 15, **dadurch gekennzeichnet, dass** sie, zwischen zwei Stützen (18), eine Interventionsstelle (22) für einen Bediener aufweist.

17. Modulare Maschine nach Anspruch 16, **dadurch gekennzeichnet, dass** die Interventionsstelle (22) mit einer Schleuse (23) mit geschütztem Zugang ausgestattet ist.

18. Modulare Maschine nach einem der Ansprüche 16 und 17, **dadurch gekennzeichnet, dass** die Interventionsstelle (22) durch Schutzwände (16) begrenzt ist, die gleitende Elemente (15) aufweisen, die auf Höhe des beweglichen Trägers (5) angeordnet sind, wobei sich die gleitenden Elemente (15) für die Bewegung des beweglichen Trägers (5) öffnen und sich wieder schließen, wenn Letzterer anhält.

19. Modulare Maschine nach den Ansprüchen 17 und 18, **dadurch gekennzeichnet, dass** die Schleuse (23) zwei Tore (24) aufweist, und dass das Öffnen und das Schließen der Tore (24) und der gleitenden Elemente (15) mit der Bewegung des beweglichen Trägers (5) synchronisiert sind.
